# EUROPÄISCHE PATENTSCHRIFT

(11) **EP 3 225 449 B1**
(45) Veröffentlichungstag und Bekanntmachung des Hinweises auf die Patenterteilung: **01.01.2020**
(21) Anmeldenummer: 15864207.4
(22) Anmeldetag: 10.10.2015
(51) Int. Cl.: B60K 7/00

(54) **RADNABENANTRIEBSANORDNUNG**
WHEEL HUB DRIVE ASSEMBLY
ENSEMBLE D'ENTRAÎNEMENT DE MOYEU DE ROUE

(30) Priorität: 24.11.2014 CN 201410683063
(43) Veröffentlichungstag der Anmeldung: 04.10.2017
(73) Patentinhaber: Schaeffler Technologies AG & Co. KG, 91074 Herzogenaurach (DE)
(72) Erfinder: HUANG, Chao, Shanghai 201804 (CN); GAO, Zhichuan, Shanghai 201804 (CN); CAI, Xiangyang, Jiangsu 215316 (CN); PAN, Hangyi, Shanghai 201804 (CN)
(86) Internationale Anmeldenummer: PCT/CN2015/091650
(87) Internationale Veröffentlichungsnummer: WO 2016/082629

(56) Entgegenhaltungen:
- EP-A1- 1 719 656
- WO-A1-2013/004406
- CN-A- 101 244 747
- CN-A- 101 564 986
- CN-A- 102 700 372
- JP-A- 2009 113 721
- US-A1- 2007 078 035
- US-B2- 7 932 652

## Beschreibung

Die vorliegende Anmeldung beansprucht die Priorität der am 24.11.2014 beim Chinesischen Patentamt eingereichten chinesischen Patentanmeldung mit der Anmeldenummer 201410683063.1 und der Erfindungsbezeichnung " 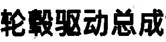 " ("Radnabenantriebseinheit"), wobei deren vollständiger Inhalt durch Querverweis in den vorliegenden Gegenstand mit einbezogen wird.

### Technisches Gebiet

Die vorliegende Erfindung betrifft das Gebiet der Automobile und Fahrzeuge und insbesondere eine Radnabenantriebseinheit.

### Allgemeiner Stand der Technik

Die größte Besonderheit der Radnabenantriebstechnik ist die Integration von Antriebs-, Übertragungs- und Bremsvorrichtung in der Radnabe, womit der mechanische Teil von elektrisch angetriebenen Fahrzeugen stark vereinfacht wird.

Die EP 1 719 656 A1 beschreibt einen Radnabenantrieb mit einem Radlager, einem Planetenuntersetzungsgetriebe und einem dieses antreibenden Elektromotor.

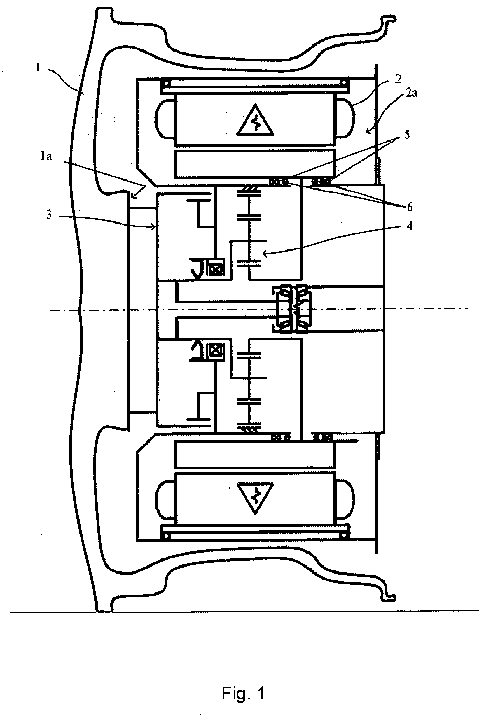

Fig. 1 zeigt ein Radnabensystem des Stands der Technik, welches die Radnabenantriebstechnik verwendet, umfassend eine Radnabe 1 sowie in der Radnabe 1 angeordnet eine elektrische Maschine 2, eine Bremse 3 sowie ein Untersetzungsgetriebe 4, wobei die Bremse 3 gegenüber dem Untersetzungsgetriebe 4 näher zur Montagefläche 1a der Radnabe 1 angeordnet ist. Das Untersetzungsgetriebe 4 ist am Ausgangsende der elektrischen Maschine 2 angeordnet, das von der elektrischen Maschine 2 ausgegebene Antriebsdrehmoment kann durch die Wirkung des Untersetzungsgetriebes 4 verstärkt und das Antriebsdrehmoment nach der Verstärkung zuletzt an die Radnabe 1 ausgegeben werden. Die Bremse 3 wirkt direkt auf die Radnabe 1, um eine Bremsung auszuführen. Dabei ist die elektrische Maschine 2 nahe zur Innenumfangsfläche der Radnabe 1 und in einer abgedichteten Elektrische-Maschine-Kammer 2a angeordnet und in der Elektrische-Maschine-Kammer 2a sind ein Stützlager 5 zum Stützen des Rotors der elektrischen Maschine 2 sowie ein Dichtungsteil 6 zum Abdichten der Elektrische-Maschine-Kammer 2a angeordnet.

Die Mängel des oben aufgeführten Radnabensystems sind wie folgt:
Zum einen wird beim Bremsen des Rads durch die Bremse ein Bremsdrehmoment bereitgestellt und um die Bremsanforderungen in allen Fahrt- und Betriebszuständen zu erfüllen, muss das Ausgangsdrehmoment der Bremse ausreichend groß sein, was zu hohen dynamischen Anforderungen an die Bremse und zu großen Komponentenabmessungen führt.

Zum anderen ist das Dichtungsteil der Elektrische-Maschine-Kammer nahe zur Innenumfangsfläche der Radnabe und entfernt von der Zentralachse der Radnabe angeordnet, weshalb die Lineargeschwindigkeit des Dichtungsteils während der Fahrt des Fahrzeugs zu hoch und die Reibung zwischen dem Dichtungsteil und der Dichtungsfläche zu groß ist, was zu einem starken Verschleiß und einer geringen Lebensdauer des Dichtungsteils führt.

### Kurzdarstellung der Erfindung

Die erste von der vorliegenden Erfindung zu lösende Aufgabe betrifft die hohen dynamischen Anforderungen an die Bremse und die großen Abmessungen der Bremse bei Radnabensystemen des Stands der Technik und die zweite zu lösende Aufgabe den starken Verschleiß und die geringe Lebensdauer des Dichtungsteils der Elektrische-Maschine-Kammer in Radnabensystemen des Stands der Technik.

Um die oben stehenden Aufgaben zu lösen, stellt die vorliegende Erfindung eine Radnabenantriebseinheit bereit, umfassend eine Radnabe, die eine Radnaben-Montagefläche aufweist; ein Gehäuse, das in der Radnabe angeordnet ist und eine abgedichtete und mit einer elektrischen Antriebsmaschine versehene Elektrische-Maschine-Kammer, eine abgedichtete und mit einem Untersetzungsgetriebe versehene Untersetzungsgetriebekammer sowie eine mit der Außenumgebung verbundene und mit einer Bremse versehene Bremsenkammer bildet, wobei die Untersetzungsgetriebekammer und die Bremsenkammer entlang einer axialen, sich von der Radnaben-Montagefläche entfernenden Richtung verteilt sind; die Elektrische-Maschine-Kammer einen nahe zur Innenumfangsfläche der Radnabe angeordneten Grundkörper und eine mit dem Grundkörper verbundene und in Richtung auf die Zentralachse der Radnabe erstreckte Passage umfasst; das Ausgangsende der elektrischen Antriebsmaschine durch die Passage geführt, anschließend aus der Elektrische-Maschine-Kammer herausgestreckt und gleichzeitig mit dem Eingangsende des Übersetzungsgetriebes sowie dem Ausgangsende der Bremse verbunden ist und wobei das Ausgangsende des Untersetzungsgetriebes mit der Radnabe verbunden ist; und am Gehäuse an einer Position nahe dem radialen Innenende der Passage ein Dichtungsteil angeordnet ist, das die Elektrische-Maschine-Kammer abdichtet.

Erfindungsgemäß umfasst die elektrische Antriebsmaschine koaxial aufgesetzt einen Elektrische-Maschine-Stator, einen Elektrische-Maschine-Rotor sowie eine fest am Elektrische-Maschine-Rotor angeordnete Rotorhalterung, wobei die Rotorhalterung als Ausgangsende der elektrischen Antriebsmaschine dient und das Dichtungsteil zwischen der Rotorhalterung und dem Gehäuse angeordnet ist.

Erfindungsgemäß weist die Rotorhalterung jeweils an beiden Seiten in Axialrichtung vorgestreckt eine erste ringförmige Vorsprungskante und eine zweite ringförmige Vorsprungskante auf, wobei die Zentralachse der Radnabe jeweils das Zentrum der ersten ringförmigen Vorsprungskante und der zweiten ringförmigen Vorsprungskante bildet; die erste ringförmige Vorsprungskante in der Passage oder außerhalb der Elektrische-Maschine-Kammer angeordnet ist, am Gehäuse ein der ersten ringförmigen Vorsprungskante in Radialrichtung oder Axialrichtung gegenüber angeordneter erster Klemmhalteteil geformt ist und zwischen dem ersten Klemmhalteteil und der ersten ringförmigen Vorsprungskante ein erster Zwischenraum gebildet wird; die zweite ringförmige Vorsprungskante in der Passage der Elektrische-Maschine-Kammer oder au-βerhalb der Elektrische-Maschine-Kammer angeordnet ist, am Gehäuse ein der zweiten ringförmigen Vorsprungskante in Radialrichtung oder Axialrichtung gegenüber angeordneter zweiter Klemmhalteteil geformt ist und zwischen dem zweiten Klemmhalteteil und der zweiten ringförmigen Vorsprungskante ein zweiter Zwischenraum gebildet wird; und wobei das Dichtungsteil einen im ersten Zwischenraum angeordneten ersten Dichtungsring und einen im zweiten Zwischenraum angeordneten zweiten Dichtungsring umfasst.

Wahlweise sind der erste Dichtungsring und der zweite Dichtungsring lippenförmige Dichtungsringe und die Lippenöffnung ist jeweils auf den Außenteil der Elektrische-Maschine-Kammer gerichtet.

Erfindungsgemäß ist die Passage entlang der Axialrichtung zwischen der Untersetzungsgetriebekammer und der Bremsenkammer angeordnet.

Erfindungsgemäß umfasst der aus der Passage herausgestreckte Teil der Rotorhalterung einen in Richtung auf das Untersetzungsgetriebe erstreckten ersten Teil sowie einen in Richtung auf die Bremse erstreckten zweiten Teil; wobei der erste Teil fest mit dem Eingangsende des Untersetzungsgetriebes verbunden ist; und der zweite Teil fest mit dem Ausgangsende der Bremse verbunden ist.

Wahlweise ist von der ersten ringförmigen Vorsprungskante und der zweiten ringförmigen Vorsprungskante mindestens eine ein Bestandteil des ersten Teils oder des zweiten Teils.

Erfindungsgemäß weist die Radnabe eine Flanschwelle auf, die auf der Zentralachse der Radnabe angeordnet und an der Radnaben-Montagefläche befestigt ist, wobei der erste Teil und die Flanschwelle in Radialrichtung einander gegenüber angeordnet sind und einen dritten Zwischenraum aufweisen; und wobei im dritten Zwischenraum ein dritter Dichtungsring angeordnet ist.

Wahlweise ist der dritte Dichtungsring ein lippenförmiger Dichtungsring und weist eine auf den Innenteil der Untersetzungsgetriebekammer gerichtete Lippenöffnung auf.

Wahlweise weist der dritte Dichtungsring außerdem eine auf den Außenteil der Untersetzungsgetriebekammer gerichtete Lippenöffnung auf.

Wahlweise ist die Flanschscheibe der Flanschwelle der Radnaben-Montagefläche zugewandt; wobei die radiale Außenseite der Flanschscheibe und das Gehäuse in Radialrichtung oder Axialrichtung einander gegenüber angeordnet sind und beide einen vierten Zwischenraum bilden; und in dem vierten Zwischenraum ein vierter Dichtungsring angeordnet ist.

Wahlweise ist der vierte Dichtungsring ein lippenförmiger Dichtungsring und weist eine auf den Innenteil der Untersetzungsgetriebekammer gerichtete Lippenöffnung auf.

Wahlweise weist der vierte Dichtungsring außerdem eine auf den Außenteil der Untersetzungsgetriebekammer gerichtete Lippenöffnung auf.

Wahlweise ist das Untersetzungsgetriebe ein Planetengetriebe, bei dem das Sonnenrad als Eingangsende dient; wobei der erste Teil fest mit dem Sonnenrad verbunden ist.

Wahlweise ist der erste Teil in das Sonnenrad eingesetzt und mit dem Sonnenrad durch Presspassung verbunden.

Wahlweise sind der zweite Teil und das Ausgangsende der Bremse über ein erstes Verbindungsteil miteinander verbunden.

Wahlweise sind das Ausgangsende des Untersetzungsgetriebes, die Flanschscheibe und die Radnaben-Montagefläche über ein zweites Verbindungsteil miteinander verbunden.

Im Vergleich zum Stand der Technik besitzt die technische Lösung der vorliegenden Erfindung folgende Vorteile:
Erstens ist das Untersetzungsgetriebe zwischen der Bremse und der Radnaben-Montagefläche angeordnet und das Ausgangsende der elektrischen Antriebsmaschine, das Eingangsende des Untersetzungsgetriebes und das Ausgangsende der Bremse sind miteinander verbunden, sodass das Untersetzungsgetriebe nicht nur dazu verwendet werden kann, um das Antriebsdrehmoment zu verstärken, sondern au-βerdem, um das Bremsdrehmoment zu verstärken, wodurch die dynamischen Anforderungen an die Bremse des Fahrzeugs stark gesenkt, die Abmessungen der mechanischen Komponenten verringert und gleichzeitig Kosten gespart werden können.

Zweitens weist die Elektrische-Maschine-Kammer eine in Richtung auf die Zentralachse der Radnabe erstreckte Passage auf und das Dichtungsteil ist am radialen Innenende der Elektrische-Maschine-Kammer nahe der Passage und damit näher an der Zentralachse der Radnabe angeordnet, weshalb während der Rotation des Rads die Lineargeschwindigkeit des Dichtungsteils nicht sehr groß wird, der Verschleiß des Dichtungsteils verringert wird und die Lebensdauer des Dichtungsteils wirksam verlängert werden kann.

### Beschreibung der beigefügten Figuren

Fig. 1 zeigt eine schematische Darstellung des Aufbaus eines Radnabensystems des Stands der Technik.
Fig. 2 zeigt eine Darstellung der Modulstruktur einer Radnabenantriebseinheit in einem Ausführungsbeispiel der vorliegenden Erfindung.
Fig. 3 zeigt eine dreidimensionale Explosionsdarstellung einer Radnabenantriebseinheit in einem Ausführungsbeispiel der vorliegenden Erfindung.
Fig. 4 zeigt eine axiale Schnittdarstellung einer Radnabenantriebseinheit in einem Ausführungsbeispiel der vorliegenden Erfindung.
Fig. 5 zeigt eine vergrößerte Teildarstellung von Fig. 4.
Fig. 6 zeigt den Aufbau der Rotorhalterung.
Fig. 7 zeigt die gegenseitigen Beziehungen des Aufbaus von erstem Lager und zweitem Lager zu Gehäuse und Rotorhalterung.

### Ausführunasformen

Um die oben beschriebenen Ziele, Merkmale und Vorteile der vorliegenden Erfindung noch deutlicher und besser verständlich zu machen, wird im Folgenden in Verbindung mit den beigefügten Figuren zu den konkreten Ausführungsbeispielen der vorliegenden Erfindung eine detaillierte Beschreibung gegeben.

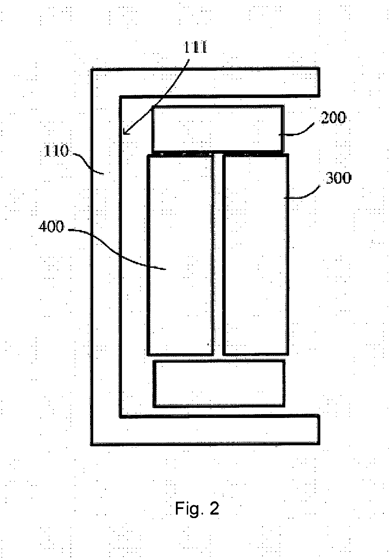

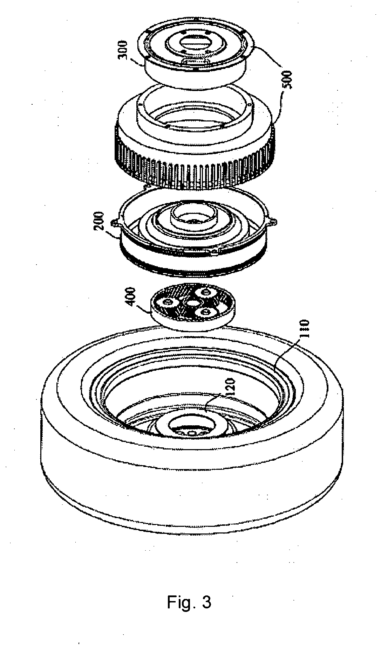

Ein Ausführungsbeispiel der vorliegenden Erfindung stellt eine Radnabenantriebseinheit bereit, wie in Fig. 2 bis 4 gezeigt, umfassend eine Radnabe 110 sowie ein auf der Zentralachse C-C der Radnabe 110 angeordnetes Radnabenlager 120. Die Radnabe 110 umfasst eine Radnaben-Montagefläche 111 und eine auf der Radnaben-Zentralachse C-C angeordnete Flanschwelle 112, wobei die Flanschwelle 112 koaxial in das Radnabenlager 120 eingesetzt und gleichzeitig über eine der Radnaben-Montagefläche 111 zugewandte Flanschscheibe 112a fest mit der Radnaben-Montagefläche 111 verbunden ist. Die Innenumfangsfläche der Radnabe 110 und die Radnaben-Montagefläche 111 umschließen und bilden eine Vertiefung. In einem anderen Ausführungsbeispiel kann die Flanschwelle 112 auch außen auf dem Radnabenlager 120 aufgesetzt sein.

Die Radnabenantriebseinheit umfasst weiterhin ein in der Vertiefung der Radnabe 110 angeordnetes Gehäuse 500, das eine abgedichtete Elektrische-Maschine-Kammer, eine abgedichtete Untersetzungsgetriebekammer sowie eine mit der Au-βenumgebung verbundene Bremsenkammer bildet, wobei die Untersetzungsgetriebekammer und die Bremsenkammer entlang der Axialrichtung verteilt sind und die Untersetzungsgetriebekammer der Bremsenkammer gegenüber sowie näher zur Radnaben-Montagefläche 111 angeordnet ist.

In der Elektrische-Maschine-Kammer ist eine elektrische Antriebsmaschine 200 angeordnet, in der Untersetzungsgetriebekammer ist ein Untersetzungsgetriebe 400 angeordnet und in der Bremsenkammer ist eine Bremse 300 angeordnet. Dabei sind die elektrische Antriebsmaschine 200, das Untersetzungsgetriebe 400, die Bremse 300 sowie das Gehäuse 500 jeweils auf der Flanschwelle 112 und auf dem Radnabenlager 120 aufgesetzt und verwenden jeweils die Radnaben-Zentralachse C-C als zentrale Achse. Die elektrische Antriebsmaschine 200 muss in trockener und sauberer Luft verwendet werden und in schwierigen Arbeitsumgebungen wie z.B. mit öligen Verschmutzungen, viel Staub oder schmutzigem Spritzwasser etc. ist ein besserer Schutz notwendig, um die Spulen zu schützen und diese sauber, trocken und korrosionsfrei zu halten, weshalb die Elektrische-Maschine-Kammer abgedichtet werden muss. Für einen regulären Betrieb des Untersetzungsgetriebes 400 ist Schmieröl notwendig, weshalb die Untersetzungsgetriebekammer für eine reine Schmierölumgebung abgedichtet sein muss. Die Bremse 300 kann im Arbeitsprozess große Mengen an Wärme, Metallspäne und anderen Verunreinigungen produzieren, wobei die Wärme und die Verunreinigungen, wenn sie nicht umgehend abgeführt werden können, nicht nur die Wirksamkeit der Bremse beeinträchtigen, sondern außerdem zu einer Unwirksamkeit der Dichtung der Elektrische-Maschine-Kammer und der Untersetzungsgetriebekammer führen und damit die Betriebseigenschaften der elektrischen Maschine und des Untersetzungsgetriebes beeinträchtigen können. Daher muss die Bremsenkammer mit der Außenumgebung verbunden sein, um die Wärme und die Verunreinigungen umgehend aus dem Radnabenraum abzuführen.

Im vorliegenden Ausführungsbeispiel ist das Ausgangsende der elektrischen Antriebsmaschine 200 aus der Elektrische-Maschine-Kammer herausgestreckt und mit dem Eingangsende des Untersetzungsgetriebes 400 und dem Ausgangsende der Bremse 300 verbunden und das Ausgangsende des Untersetzungsgetriebes 400 ist mit der Radnabe 110 verbunden.

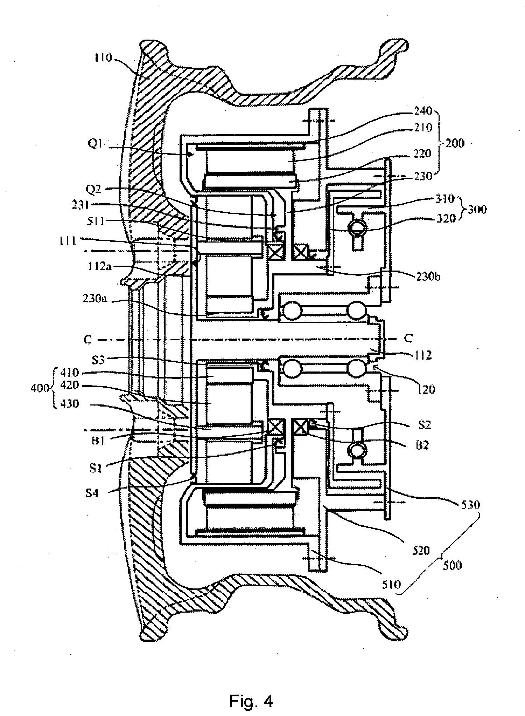

Die elektrische Antriebsmaschine 200 wird verwendet, um ein Antriebsdrehmoment zu erzeugen. Wie in Fig. 4 gezeigt, umfasst die elektrische Antriebsmaschine 200 koaxial aufgesetzt einen Elektrische-Maschine-Rotor 220, einen Elektrische-Maschine-Stator 210 sowie eine am Elektrische-Maschine-Rotor 220 befestigte Rotorhalterung 230, wobei die Rotorhalterung 230 als Verbindung zwischen dem Ausgangsende der elektrischen Maschine 200 und dem Eingangsende des Untersetzungsgetriebes 400 dient, um das Antriebsdrehmoment über das Untersetzungsgetriebe 400 an das Rad auszugeben. Aufgrund der Verstärkungswirkung des Untersetzungsgetriebes 400 auf das Drehmoment kann die elektrische Antriebsmaschine mit einem verringerten Ausgangsdrehmoment ein größeres Antriebsdrehmoment am Rad erzielen, womit die Anforderungen an das maximale Ausgangsdrehmoment der elektrischen Antriebsmaschine und entsprechend die Anforderungen an die Abmessungen der elektrischen Antriebsmaschine verringert werden und womit sich außerdem der erforderliche Montageraum für die elektrische Antriebsmaschine verkleinert. Dabei kann für die Rotorhalterung 230 auch ein beliebiges wärmeisolierendes Material verwendet werden.

Darüber hinaus kann die elektrische Antriebsmaschine 200 weiterhin ein Kühlsystem umfassen wie z.B. ein Luftkühlsystem oder ein Wasserkühlsystem. Im vorliegenden Ausführungsbeispiel wird eine Kühlwasserhülse 240 als Kühlsystem zur Kühlung der elektrischen Maschine verwendet. Die Kühlwasserhülse 240 kann zwischen dem Elektrische-Maschine-Stator 210 und dem Gehäuse 500 befestigt sein.

Die Bremse 300 wird verwendet, um ein Bremsdrehmoment zu erzeugen. Wie in Fig. 4 gezeigt, ist im vorliegenden Ausführungsbeispiel die Bremse 300 eine Trommelbremse, umfassend einen mit dem Gehäuse 500 verbundenen Bremsschuh 310; und eine außen am Bremsschuh 310 aufgesetzte Bremstrommel 320. Die Bremstrommel 320 dient als Verbindung zwischen dem Ausgangsende der Bremse 300 und dem Untersetzungsgetriebe 400. Aufgrund der Verstärkungswirkung des Untersetzungsgetriebes 400 auf das Drehmoment kann die Bremse mit einem verringerten Ausgangsdrehmoment am Rad ein größeres Bremsdrehmoment erzielen, womit die Anforderungen an das maximale Ausgangsdrehmoment der Bremse und entsprechend die Anforderungen an die Abmessungen der Bremse 300 verringert werden und womit sich außerdem der erforderliche Montageraum für die Bremse 300 verkleinert.

Das Untersetzungsgetriebe 400 wird verwendet, um das Antriebsdrehmoment oder das Bremsdrehmoment zu verstärken. Wie in Fig. 4 gezeigt, ist im vorliegenden Ausführungsbeispiel das Untersetzungsgetriebe 400 ein Planetengetriebe, umfassend ein Sonnenrad 410, mehrere Planetenräder 420 sowie einen Planetenrahmen 430. Das Sonnenrad 410 dient als Verbindung des Eingangsendes des Untersetzungsgetriebes 400 zur Rotorhalterung 230 (d.h. zum Ausgangsende der elektrischen Antriebsmaschine 200) und zur Bremstrommel 320 (d.h. zum Ausgangsende der Bremse 300), die Planetenräder 420 sind das Sonnenrad 410 umringend angeordnet und gleichzeitig mit dem Sonnenrad 410 verzahnt, der Planetenrahmen 430 ist mit den mehreren Planetenrädern 420 verbunden und dient als Verbindung zwischen dem Ausgangsende des Untersetzungsgetriebes 400 und der Radnabe 110.

Im vorliegenden Ausführungsbeispiel ist die elektrische Antriebsmaschine eine elektrische Maschine mit Innenrotor; das Planeten-Untersetzungsgetriebe ist ein Einfach-Untersetzungsgetriebe mit drei Planetenrädern 420 und einem Wahlbereich für das Untersetzungsverhältnis von 2 bis 6. Außerdem kann entsprechend den tatsächlichen Konstruktionsanforderungen das Planeten-Untersetzungsgetriebe auch ein Mehrfach-Untersetzungsgetriebe mit mehr als drei Planetenrädern 420 sein und das Untersetzungsverhältnis kann größer als 6 sein.

Dabei ist zu beachten, dass in einem anderen Ausführungsbeispiel die elektrische Antriebsmaschine 200 auch eine elektrische Maschine mit einem Außenrotor ein kann. Das Untersetzungsgetriebe 400 muss nicht auf ein Planetengetriebe beschränkt sein, sondern kann eine beliebige Art eines mechanischen Systems sein, mit dem ein Antriebsdrehmoment und ein Bremsdrehmoment verstärkt werden können. Die Bremse 300 ist ebenfalls nicht auf eine Trommelbremse beschränkt, sondern kann beispielsweise auch eine Scheibenbremse sein. Es muss lediglich gegeben sein, dass bei der Montage das Ausgangsende der Bremse 300 mit dem Eingangsende des Untersetzungsgetriebes 400 und gleichzeitig mit dem Ausgangsende der elektrischen Antriebsmaschine 200 verbunden wird, damit das Ziel der vorliegenden Erfindung erreicht werden kann.

Das Arbeitsprinzip der Radnabenantriebseinheit im vorliegenden Ausführungsbeispiel ist wie folgt:
Die Rotorhalterung 230 der elektrischen Antriebsmaschine 200, das Sonnenrad 410 des Planeten-Untersetzungsgetriebes und die Bremstrommel 320 der Trommelbremse sind fest miteinander verbunden und alle drei rotieren synchron.

Wenn sich das Rad im Antriebsmodus befindet, arbeitet die elektrische Antriebsmaschine 200 und gibt ein Antriebsdrehmoment aus; der Bremsschuh 310 der Trommelbremse ist nicht gespreizt und es wird kein Bremsdrehmoment ausgegeben. Der Elektrische-Maschine-Rotor 220 treibt die Rotorhalterung 230 an, sodass diese rotiert, das Sonnenrad 410 wird angetrieben und rotiert und überträgt das Antriebsdrehmoment auf das Planeten-Untersetzungsgetriebe. Somit wird das von der elektrischen Antriebsmaschine 200 ausgegebene Antriebsdrehmoment durch die Verstärkungswirkung des Planeten-Untersetzungsgetriebes verstärkt und an die Radnabe ausgegeben.

Wenn sich das Rad im Bremsmodus befindet, gibt die elektrische Antriebsmaschine 200 kein Antriebsdrehmoment aus; und die Trommelbremse gibt ein Bremsdrehmoment aus, der Bremsschuh 310 wird gespreizt und übt eine Klemmwirkung auf die Bremstrommel 320 aus und übt damit auf die Bremstrommel 320 ein Bremsdrehmoment aus, sodass die Drehzahl der Bremstrommel 320 sinkt, womit auch die Drehzahl des Sonnenrads 410 sinkt. Somit wird das von der Trommelbremse ausgegebene Bremsdrehmoment durch die Verstärkungswirkung des Planeten-Untersetzungsgetriebes verstärkt und an die Radnabe ausgegeben.

Dies zeigt, dass in der Radnabenantriebseinheit des vorliegenden Ausführungsbeispiels die Anordnung des Untersetzungsgetriebes zwischen der Bremse und der Radnaben-Montagefläche und die gemeinsame Verbindung von dem Ausgangsende der elektrischen Antriebsmaschine, dem Eingangsende des Untersetzungsgetriebes und dem Ausgangsende der Bremse bewirkt, dass das Untersetzungsgetriebe nicht nur verwendet werden kann, um das Antriebsdrehmoment zu verstärken, sondern außerdem um das Bremsdrehmoment zu verstärken, sodass die dynamischen Anforderungen an die Bremse des Fahrzeugs deutlich gesenkt, die Abmessungen der mechanischen Komponenten verringert und gleichzeitig Kosten gespart werden.

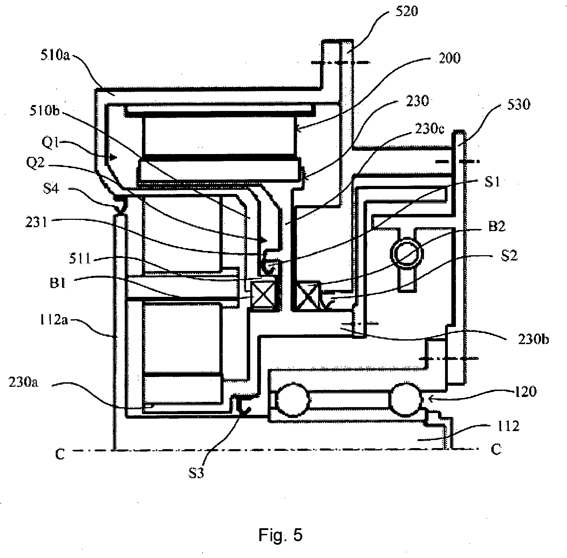

Wie weiter in Fig. 4 in Verbindung mit Fig. 5 gezeigt, umfasst die Elektrische-Maschine-Kammer nahe der Innenumfangsfläche der Radnabe einen Grundkörper Q1 sowie eine mit dem Grundkörper Q1 verbundene und in Richtung auf die Radnaben-Zentralachse C-C ausgestreckte Passage Q2. Der Elektrische-Maschine-Stator 210 und der Elektrische-Maschine-Rotor 220 der elektrischen Antriebsmaschine 200 sind im Grundkörper Q1 angeordnet und die Rotorhalterung 230 dient als Ausgangsende der elektrischen Antriebsmaschine 200, das durch die Passage Q2 hindurchgeführt und anschließend aus der Elektrische-Maschine-Kammer herausgestreckt ist und das gleichzeitig mit dem Eingangsende des Untersetzungsgetriebes 400 und dem Ausgangsende der Bremse 300 verbunden ist.

Im Gehäuse 500 ist zwischen einer Position nahe dem radialen Innenende der Passage Q2 und der Rotorhalterung 230 ein Dichtungsteil angeordnet.

Gleichzeitig ist im Gehäuse 500 zwischen einer Position nahe dem radialen Innenende der Passage Q2 und der Rotorhalterung 230 ein Stützlager angeordnet, das die Rotorhalterung 230 und den Elektrische-Maschine-Rotor 220 stützt.

Es ist erkennbar, dass im Unterschied zur Anordnungsmethode von Dichtungsteil und Stützlager der Elektrische-Maschine-Kammer in Radnabensystemen des Stands der Technik in der Radnabenantriebseinheit des vorliegenden Ausführungsbeispiels die Elektrische-Maschine-Kammer unterteilt wird in einen nahe der Innenumfangsfläche der Radnabe angeordneten Grundkörper Q1 und eine in Richtung auf die Zentralachse der Radnabe ausgestreckte Passage Q2 und dass das Dichtungsteil und das Stützlager in der Elektrische-Maschine-Kammer an einer Position nahe dem radialen Innenende der Passage Q2 angeordnet sind, womit beide näher an der Zentralachse der Radnabe angeordnet sind, um ihren Durchmesser zu verkleinern. Beim Dichtungsteil bewirkt ein kleinerer Durchmesser während der Rotation des Rads, dass die Lineargeschwindigkeit des Dichtungsteils nicht zu groß werden kann, wodurch der Verschleiß des Dichtungsteils verringert und seine Lebensdauer verlängert werden können. Beim Stützlager bewirkt ein kleinerer Durchmesser während der Rotation des Rads ebenfalls, dass die Lineargeschwindigkeit des Stützlagers nicht zu groß werden kann, wodurch sich die Anforderungen an dessen Zuverlässigkeit und Haltbarkeit verringern und die Konstruktions- und Herstellungskosten gesenkt werden können. Außerdem muss das Stützlager nicht mehr im Grundkörper der Elektrische-Maschine-Kammer angeordnet werden, was den radialen Raumbedarf des Grundkörpers der Elektrische-Maschine-Kammer verringert, weshalb sich auch der maximale konstruktionsbedingt mögliche Außendurchmesser des Untersetzungsgetriebes erhöht und für das Untersetzungsgetriebe ein größeres Untersetzungsverhältnis gewählt werden kann.

Konkret umfasst das Gehäuse 500, wie weiterhin in Fig. 4 in Verbindung mit Fig. 5 gezeigt, entlang der axialen sich von der Radnaben-Montagefläche 111 entfernenden Richtung einen ersten Gehäusekörper 510, einen abdeckend auf dem ersten Gehäusekörper 510 angeordneten zweiten Gehäusekörper 520 sowie einen abdeckend auf dem zweiten Gehäusekörper 520 angeordneten dritten Gehäusekörper 530. Die drei Teil-Gehäusekörper sind jeweils ringförmig.

Der erste Gehäusekörper 510 und der zweite Gehäusekörper 520 umschließen gemeinsam die Elektrische-Maschine-Kammer. Dabei weist der erste Gehäusekörper 510, wie in Fig. 5 gezeigt, nahe der Innenumfangsfläche der Radnabe einen ersten Teil 510a auf, dessen axiale Schnittfläche eine C-Form aufweist, sowie einen entlang der Radialrichtung nach innen erstreckten zweiten Teil 510b, wobei der zweite Teil 510b am radialen Innenende des ersten Teils 510a angeordnet ist und beide eine Einheit bilden. Der zweite Gehäusekörper 520 verschließt im Prinzip die C-förmige Öffnung des ersten Teils 510a, bildet mit dem ersten Teil 510a gemeinsam den Grundkörper Q1 der Elektrische-Maschine-Kammer und umschließt gleichzeitig gemeinsam mit dem zweiten Teil 510b die Passage Q2. Dabei weist die Passage Q2 eine auf die Radnaben-Zentralachse C-C gerichtete Öffnung (in der Fig. nicht gekennzeichnet) auf, damit die Rotorhalterung 230 aus der Elektrische-Maschine-Kammer herausgestreckt werden kann.

Der erste Gehäusekörper 510 umschließt gemeinsam mit der Flanschwelle 112 und der Rotorhalterung 230 die Untersetzungsgetriebekammer.

Der dritte Gehäusekörper 530 ist mit dem Radnabenlager 120 verbunden und umschließt gemeinsam mit dem Radnabenlager 120, dem zweiten Gehäusekörper 520 und der Rotorhalterung 230 die Bremsenkammer. Am dritten Gehäusekörper 530 sind mehrere Durchgangslöcher (in der Fig. nicht gekennzeichnet) angeordnet, durch welche die Wärme und die Verunreinigungen, die von der Bremse 300 erzeugt werden, abgeführt werden können.

Dabei ist die Passage Q2 zwischen der Untersetzungsgetriebekammer und der Bremsenkammer angeordnet.

Bei der Montage der Radnabenantriebseinheit werden die Bremse 300 und der dritte Gehäusekörper 530 fest miteinander verbunden, wobei zunächst das Untersetzungsgetriebe 400, der erste Gehäusekörper 510, die elektrische Antriebsmaschine 200 und der zweite Gehäusekörper 520 nacheinander in der Radnabe 110 montiert werden und anschließend die mit dem dritten Gehäusekörper 530 verbundene Bremse 300 in der Radnabe 110 montiert wird.

In einem anderen Ausführungsbeispiel kann das Gehäuse 500 auch aus zwei Teilen bestehen, beispielsweise indem der zweite Gehäusekörper 520 und der dritte Gehäusekörper 530 eine Einheit bzw. ein Teil bilden, welches wiederum abdeckend auf dem ersten Gehäusekörper 510 angeordnet ist. Es ist zu beachten, dass das Gehäuse 500 auch aus mehr als drei Teilen zusammengesetzt sein kann und dass lediglich gegeben sein muss, dass die restlichen Gehäuseteile mit dem am weitesten innenseitig angeordneten ersten Gehäusekörper 510 einen Radnabenraum umschließen, um das Ziel der vorliegenden Erfindung erreichen zu können.

Das Dichtungsteil der Elektrische-Maschine-Kammer umfasst einen ersten Dichtungsring S1 und einen zweiten Dichtungsring S2, wobei diese jeweils zwischen der Rotorhalterung 230 und dem ersten Gehäusekörper 510 sowie zwischen der Rotorhalterung 230 und dem zweiten Gehäusekörper 520 angeordnet sind und die Elektrische-Maschine-Kammer durch die beiden Dichtungsringe abgedichtet wird. Dabei sind die beiden Dichtungsringe jeweils lippenförmige Dichtungsringe, wobei der zweite Dichtungsring S2 mehrere auf den Außenteil der Elektrische-Maschine-Kammer gerichtete Lippenöffnungen aufweist.

Das Stützlager der Elektrische-Maschine-Kammer umfasst ein erstes Lager B1 und ein zweites Lager B2, wobei diese jeweils zwischen der Rotorhalterung 230 und dem ersten Gehäusekörper 510 sowie zwischen der Rotorhalterung 230 und dem zweiten Gehäusekörper 520 angeordnet sind und durch die beiden Lager die Rotorhalterung 230 und damit der Rotor 210 gestützt wird.

Im vorliegenden Ausführungsbeispiel weist der Rotorrahmen 230, wie in Fig. 4 in Verbindung mit Fig. 5 bis 7 gezeigt, eine in Richtung auf den ersten Gehäusekörper 510 vorgestreckte erste ringförmige Vorsprungskante 231 auf, wobei die Radnaben-Zentralachse das Zentrum der ersten ringförmigen Vorsprungskante 231 bildet. Der erste Gehäusekörper 510 weist einen der ersten ringförmigen Vorsprungskante 231 in Radialrichtung gegenüber angeordneten ersten Klemmhalteteil 511 auf, wobei die erste ringförmige Vorsprungskante 231 in der Passage Q2 der Elektrische-Maschine-Kammer angeordnet ist und der erste Klemmhalteteil 511 am radialen Innenende des ersten Gehäusekörpers 510 angeordnet und in Richtung auf den zweiten Gehäusekörper 520 vorgestreckt ist. Der erste Klemmhalteteil 511 bildet mit der ersten ringförmigen Vorsprungskante 231 einen ersten Zwischenraum. Der erste Dichtungsring S1 ist im ersten Zwischenraum angeordnet.

Aus Fig. 4 und 5 ist erkennbar, dass ohne einen ersten Dichtungsring S1 die Elektrische-Maschine-Kammer und die Untersetzungsgetriebekammer verbunden wären und somit der erste Dichtungsring S1 die Elektrische-Maschine-Kammer von der Untersetzungsgetriebekammer trennen kann. Gleichzeitig ist die Lippenöffnung des ersten Dichtungsrings S1 aus der Elektrische-Maschine-Kammer nach außen gerichtet, d.h. sie ist in die Untersetzungsgetriebekammer gerichtet. Mit einer solchen Anordnung kann einerseits verhindert werden, dass das Schmieröl aus der Untersetzungsgetriebekammer herausfließt und andererseits, dass das Schmieröl in die Elektrische-Maschine-Kammer hineinfließt.

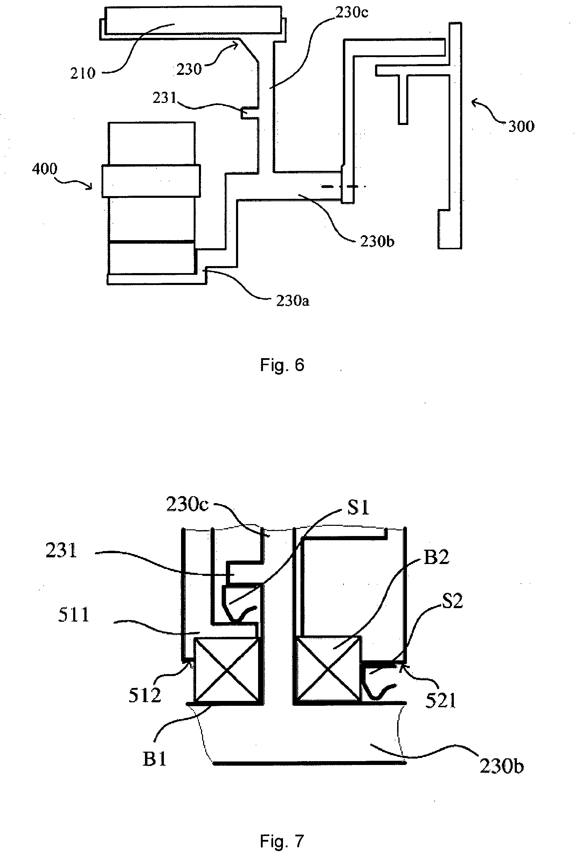

Wie in Fig. 4 und 5 in Verbindung mit Fig. 6 und 7 gezeigt, umfasst die Rotorhalterung 230 einen durch die Passage Q2 geführten Verbindungsteil 230c (Fig. 5), einen außerhalb der Elektrische-Maschine-Kammer angeordneten und in Richtung auf das Untersetzungsgetriebe 400 erstreckten ersten Teil 230a sowie einen in Richtung auf die Bremse 300 erstreckten zweiten Teil 230b. Ein Ende des Verbindungsteils 230c ist aus der Passage Q2 herausgestreckt und mit dem zweiten Teil 230b verbunden, der erste Teil 230a ist fest mit dem Eingangsende des Untersetzungsgetriebes 400 verbunden und der zweite Teil 230b ist fest mit dem Ausgangsende der Bremse 300 verbunden. Dabei ist der zweite Teil 230b an der radialen Innenseite des ersten Gehäusekörpers 510 und des zweiten Gehäusekörpers 520 angeordnet und weist außerdem jeweils einen Teil auf, der den radialen Innenenden dieser beiden in Radialrichtung gegenüber angeordnet ist.

Der zweite Teil 230b ist dem radialen Innenende des zweiten Gehäusekörpers 520 in Radialrichtung gegenüber angeordnet und bildet mit diesem einen zweiten Zwischenraum, wobei der zweite Dichtungsring S2 im zweiten Zwischenraum angeordnet ist. Aus Fig. 4 und 5 ist erkennbar, dass ohne einen zweiten Dichtungsring S2 die Elektrische-Maschine-Kammer und die Bremsenkammer verbunden wären und somit der zweite Dichtungsring S2 die Elektrische-Maschine-Kammer von der Bremsenkammer trennen kann. Gleichzeitig ist die Lippenöffnung des zweiten Dichtungsrings S2 aus der Elektrische-Maschine-Kammer nach außen gerichtet, d.h. sie ist in die Bremsenkammer gerichtet. Mit einer solchen Anordnung kann verhindert werden, dass von der Bremse erzeugte Wärme und Verunreinigungen sowie Staub und Wasser aus der Außenumgebung der Radnabe in die Elektrische-Maschine-Kammer hineingelangen.

Der zweite Teil 230b ist außerdem dem ersten Klemmhalteteil 511 des ersten Gehäusekörpers 510 in Radialrichtung gegenüber angeordnet und das erste Lager B1 ist zwischen dem ersten Klemmhalteteil 511 und dem zweiten Teil 230b angeordnet. Das zweite Lager B2 ist genau wie der zweite Dichtungsring S2 ebenfalls im zweiten Zwischenraum angeordnet und gleichzeitig ist das zweite Lager B2 in Axialrichtung dem zweiten Dichtungsring S2 gegenüber sowie näher zur Rotorhalterung 230 angeordnet.

Dabei ist, wie in Fig. 7 gezeigt, jeweils ein Axialende des ersten Lagers B1 und des zweiten Lagers B2 an dem aus der Passage Q2 herausgestreckten Endteil des Verbindungsteils 230c abgestützt. Außerdem weist das radiale Innenende des ersten Gehäusekörpers 510 einen in Richtung auf die Radnaben-Zentralachse C-C vorgestreckten ersten Vorsprung 512 auf, wobei das erste Lager B1 in Axialrichtung zwischen dem ersten Vorsprung 512 und dem Verbindungsteil 230c festgeklemmt wird. Das radiale Innenende des zweiten Gehäusekörpers 520 weist einen in Richtung auf die Radnaben-Zentralachse C-C vorgestreckten zweiten Vorsprung 521 auf, wobei das zweite Lager B2 in Axialrichtung zwischen dem zweiten Vorsprung 521 und dem Verbindungsteil 230c festgeklemmt wird.

Dies zeigt, dass der erste Dichtungsring S1 die Elektrische-Maschine-Kammer von der Untersetzungsgetriebekammer trennt und das erste Lager B1 außerhalb der Elektrische-Maschine-Kammer und innerhalb der Untersetzungsgetriebekammer angeordnet ist, sodass das erste Lager B1 ebenso durch das Schmieröl in der Untersetzungsgetriebekammer geschmiert werden kann. Der zweite Dichtungsring S2 trennt die Elektrische-Maschine-Kammer von der Bremsenkammer und dichtet das zweite Lager B2 in der Elektrische-Maschine-Kammer ab, sodass das zweite Lager B2 gegen Wasser und Staub aus der Außenumgebung sowie gegen die von der Bremse erzeugte Wärme und Verunreinigungen geschützt wird.

Bei der Montage wird zunächst das erste Lager B1 am ersten Gehäusekörper 510 montiert, dann wird das erste Lager B1 durch die Rotorhalterung 230 mit einem Druck beaufschlagt, anschließend das zweite Lager B2 montiert und dann wiederum das zweite Lager B2 durch den zweiten Gehäusekörper 520 mit einem Druck beaufschlagt. Außerdem kann in Radialrichtung an der radialen Außenseite des ersten Lagers B1 (d.h. zwischen dem Außenring und dem ersten Gehäusekörper 510) oder an der radialen Innenseite des ersten Lagers B1 (d.h. zwischen dem Innenring und dem zweiten Teil 230b der Rotorhalterung) eine Dämpfungsplatte angeordnet sein, um Toleranzen bei der Montage auszugleichen und ein Spiel aus der Montage zu beseitigen. Die Dämpfungsplatte kann auch gleichzeitig an der radialen Innenseite und der radialen Außenseite des ersten Lagers B1 angeordnet sein.

In einem anderen Ausführungsbeispiel, bei dem das zweite Lager B2 bereits eine Wasser- und Staubschutzfunktion aufweist, können die Positionen des zweiten Lagers B2 und des zweiten Dichtungsrings S2 vertauscht sein. Oder der zweite Dichtungsring S2 wird in der Passage Q2 angeordnet und entsprechend wird an der Rotorhalterung 230 eine in Richtung auf den zweiten Gehäusekörper 520 vorgestreckte zweite ringförmige Vorsprungskante angeordnet und am zweiten Gehäusekörper 520 wird der zweiten ringförmigen Vorsprungskante in Radialrichtung gegenüber ein zweiter Klemmhalteteil angeordnet, wobei in diesem Fall ein zweiter Zwischenraum zwischen dem zweiten Klemmhalteteil und der zweiten ringförmigen Vorsprungskante gebildet wird und anschließend der zweite Dichtungsring S2 im zweiten Zwischenraum angeordnet wird. Oder es kann auch, da die Rotorhalterung 230 und der zweite Gehäusekörper 520 jeweils einander in Axialrichtung gegenüber angeordnete Teile aufweisen, der zweite Dichtungsring S2 direkt zwischen den einander in Axialrichtung gegenüber angeordneten Teilen der Rotorhalterung 230 und des zweiten Gehäusekörpers 520 angeordnet werden.

In einem anderen Ausführungsbeispiel kann auch, da die Rotorhalterung 230 und der erste Gehäusekörper 510 jeweils einander in Axialrichtung gegenüber angeordnete Teile aufweisen, der erste Dichtungsring S1 direkt zwischen den einander in Axialrichtung gegenüber angeordneten Teilen der Rotorhalterung 230 und des ersten Gehäusekörpers 510 angeordnet werden.

In einem anderen Ausführungsbeispiel kann die erste ringförmige Vorsprungskante 231 auch außerhalb der Passage Q2 angeordnet sein. Oder der erste Dichtungsring S1 kann wie der zweite Dichtungsring S2 angeordnet werden, d.h. die erste ringförmige Vorsprungskante 231 wird als ein Bestandteil des zweiten Teils 230b betrachtet und anschließend wird der erste Dichtungsring S1 zwischen dem zweiten Teil 230b und dem ersten Klemmhalteteil 511 angeordnet.

In einem anderen Ausführungsbeispiel ist der erste Teil 230a der Rotorhalterung 230 in das Sonnenrad 410 eingesetzt und mit dem Sonnenrad 410 durch Presspassung verbunden oder er kann auch durch andere Methoden wie Kerbverzahnung, Schrauben, Aufschrumpfen etc. fest mit dem Sonnenrad 410 verbunden sein. Der zweite Teil 230b der Rotorhalterung 230 und die Bremstrommel 320 (das Ausgangsende der Bremse 300) sind durch ein erstes Verbindungsteil (in den Fig. nicht dargestellt) verbunden. Für das erste Verbindungsteil können Schrauben, Bolzen oder andere Verbindungsteile verwendet werden. Da der zweite Teil 230b entlang der Axialrichtung erstreckt ist und bei der Rotation um die Radnaben-Zentralachse C-C einen Hohlzylinder bildet, kann die Rotorhalterung 230 während der Rotation des Rads besser die im Antriebs- oder Bremsvorgang erzeugten Stoßkräfte aufnehmen, womit sie den Rotor 210 stabiler und zuverlässiger stützen kann.

Wie weiter in Fig. 4 in Verbindung mit Fig. 5 gezeigt, sind der erste Teil 230a und die Flanschwelle 112 einander in Radialrichtung gegenüber angeordnet und weisen einen dritten Zwischenraum auf, in dem ein dritter Dichtungsring S3 angeordnet ist. Der dritte Dichtungsring S3 ist ein lippenförmiger Dichtungsring und weist eine oder mehrere auf den Innenteil der Untersetzungsgetriebekammer gerichtete Lippenöffnungen auf. Aus Fig. 4 und 5 ist erkennbar, dass ohne den dritten Dichtungsring S3 die Untersetzungsgetriebekammer mit der Bremsenkammer verbunden wäre und dass der dritte Dichtungsring S3 die Untersetzungsgetriebekammer von der Bremsenkammer trennen kann und dass die auf den Innenteil der Untersetzungsgetriebekammer gerichtete Lippenöffnung verhindern kann, dass das Schmieröl aus der Untersetzungsgetriebekammer herausfließt.

In einem anderen Ausführungsbeispiel kann der dritte Dichtungsring S3 weiterhin eine oder mehrere auf den Außenteil der Untersetzungsgetriebekammer gerichtete Lippenöffnungen aufweisen, um die Dichtungswirkung zu verstärken und das Eindringen von Staub und Wasser aus der Außenumgebung in die Untersetzungsgetriebekammer noch besser zu verhindern.

Wie weiter in Fig. 4 in Verbindung mit Fig. 5 gezeigt, sind der Planetenrahmen 430, die Flanschscheibe 112a und die Radnaben-Montagefläche 111 durch ein zweites Verbindungsteil (in den Fig. nicht dargestellt) miteinander verbunden, um das Ausgangsende des Untersetzungsgetriebes 400 mit der Radnabe 110 zu verbinden, wobei für das zweite Verbindungsteil Schrauben, Bolzen oder andere Verbindungsteile verwendet werden können. Die radiale Außenseite der Flanschscheibe 112a und der erste Gehäusekörper 510 im Gehäuse 500 sind einander in Radialrichtung gegenüber angeordnet und bilden einen vierten Zwischenraum, in dem ein vierter Dichtungsring S4 angeordnet ist. Der vierte Dichtungsring S4 ist ein lippenförmiger Dichtungsring und weist eine oder mehrere auf den Innenteil der Untersetzungsgetriebekammer gerichtete Lippenöffnungen auf. Aus Fig. 4 und 5 ist erkennbar, dass ohne den vierten Dichtungsring S4 die Untersetzungsgetriebekammer mit der Außenumgebung verbunden wäre und dass der vierte Dichtungsring S4 die Untersetzungsgetriebekammer von der Außenumgebung trennen kann und dass die auf den Innenteil der Untersetzungsgetriebekammer gerichtete Lippenöffnung verhindern kann, dass das Schmieröl aus der Untersetzungsgetriebekammer herausfließt.

In einem anderen Ausführungsbeispiel können die radiale Außenseite der Flanschscheibe 112a und der erste Gehäusekörper 510 im Gehäuse 500 einander auch in Axialrichtung gegenüber angeordnet sein, um den vierten Zwischenraum zu bilden. Der vierte Dichtungsring S4 kann weiterhin eine oder mehrere auf den Außenteil der Untersetzungsgetriebekammer gerichtete Lippenöffnungen aufweisen, um die Dichtungswirkung zu verstärken und das Eindringen von Staub und Wasser aus der Au-βenumgebung in die Untersetzungsgetriebekammer noch besser zu verhindern.

Auch wenn die vorliegende Erfindung wie oben stehend offengelegt wurde, ist sie doch nicht hierauf beschränkt. Ein beliebiger Fachmann des technischen Gebiets kann, ohne den Geist und Umfang der vorliegenden Erfindung zu verlassen, alle Arten von Veränderungen und Korrekturen durchführen, daher gilt als Schutzumfang der vorliegenden Erfindung der in den Patentansprüchen festgelegte Umfang.

## Patentansprüche

1. Eine Radnabenantriebseinheit, umfassend:
eine Radnabe (110), die eine Radnaben-Montagefläche (111) aufweist;
ein Gehäuse (500), das in der Radnabe (110) angeordnet ist und eine abgedichtete und mit einer elektrischen Antriebsmaschine (200) versehene Elektrische-Maschine-Kammer, eine abgedichtete und mit einem Untersetzungsgetriebe (400) versehene Untersetzungsgetriebekammer sowie eine mit der Außenumgebung verbundene und mit einer Bremse (300) versehene Bremsenkammer bildet;
wobei die Untersetzungsgetriebekammer und die Bremsenkammer entlang einer axialen, sich von der Radnaben-Montagefläche (111) entfernenden Richtung verteilt sind;
die Elektrische-Maschine-Kammer einen nahe zur Innenumfangsfläche der Radnabe (110) angeordneten Grundkörper (Q1) und eine mit dem Grundkörper (Q1) verbundene und in Richtung auf die Zentralachse (C-C) der Radnabe (110) erstreckte Passage (Q2) umfasst;
das Ausgangsende der elektrischen Antriebsmaschine (200) durch die Passage (Q2) geführt, anschließend aus der Elektrische-Maschine-Kammer herausgestreckt und gleichzeitig mit dem Eingangsende des Untersetzungsgetriebes (400) sowie dem Ausgangsende der Bremse (300) verbunden ist und das Ausgangsende des Untersetzungsgetriebes (400) mit der Radnabe (110) verbunden ist;
**dadurch gekennzeichnet, dass**
am Gehäuse (500) an einer Position nahe dem radialen Innenende der Passage (Q2) ein Dichtungsteil angeordnet ist, das die Elektrische-Maschine-Kammer abdichtet, wobei die elektrische Antriebsmaschine (200) koaxial aufgesetzt einen Elektrische-Maschine-Stator (210), einen Elektrische-Maschine-Rotor (220) sowie eine fest am Elektrische-Maschine-Rotor (220) angeordnete Rotorhalterung (230) umfasst, wobei die Rotorhalterung (230) als Ausgangsende der elektrischen Antriebsmaschine (200) dient und das Dichtungsteil zwischen der Rotorhalterung (230) und dem Gehäuse (500) angeordnet ist,
die Rotorhalterung (230) jeweils an beiden Seiten in Axialrichtung vorgestreckt eine erste ringförmige Vorsprungskante (231) und eine zweite ringförmige Vorsprungskante aufweist, wobei
die Zentralachse (C-C) der Radnabe jeweils das Zentrum der ersten ringförmigen Vorsprungskante (231) und der zweiten ringförmigen Vorsprungskante bildet;
die erste ringförmige Vorsprungskante (231) in der Passage (Q2) oder außerhalb der Elektrische-Maschine-Kammer angeordnet ist, am Gehäuse (500) ein der ersten ringförmigen Vorsprungskante (231) in Radialrichtung oder Axialrichtung gegenüber angeordneter erster Klemmhalteteil (511) geformt ist und zwischen dem ersten Klemmhalteteil (511) und der ersten ringförmigen Vorsprungskante (231) ein erster Zwischenraum gebildet wird;
die zweite ringförmige Vorsprungskante in der Passage (Q2) der Elektrische-Maschine-Kammer oder außerhalb der Elektrische-Maschine-Kammer angeordnet ist, am Gehäuse (500) ein der zweiten ringförmigen Vorsprungskante in Radialrichtung oder Axialrichtung gegenüber angeordneter zweiter Klemmhalteteil geformt ist und zwischen dem zweiten Klemmhalteteil und der zweiten ringförmigen Vorsprungskante ein zweiter Zwischenraum gebildet wird;
das Dichtungsteil einen im ersten Zwischenraum angeordneten ersten Dichtungsring (S1) und einen im zweiten Zwischenraum angeordneten zweiten Dichtungsring (S2) umfasst, die Passage (Q2) entlang der Axialrichtung zwischen der Untersetzungsgetriebekammer und der Bremsenkammer angeordnet ist,
der aus der Passage (Q2) herausgestreckte Teil der Rotorhalterung (230) einen in Richtung auf das Untersetzungsgetriebe (400) erstreckten ersten Teil (230a) sowie einen in Richtung auf die Bremse (300) erstreckten zweiten Teil (230b) umfasst,
der erste Teil (230a) fest mit dem Eingangsende des Untersetzungsgetriebes (400) verbunden ist,
und der zweite Teil (230b) fest mit dem Ausgangsende der Bremse (300) verbunden ist,
die Radnabe (110) eine Flanschwelle (112) aufweist, die auf der Zentralachse (C-C) der Radnabe (110) angeordnet und an der Radnaben-Montagefläche (111) befestigt ist, wobei der erste Teil und die Flanschwelle (112) in Radialrichtung einander gegenüber angeordnet sind und einen dritten Zwischenraum aufweisen;
und im dritten Zwischenraum ein dritter Dichtungsring (S3) angeordnet ist.

2. Radnabenantriebseinheit nach Anspruch 1, **dadurch gekennzeichnet, dass** der erste Dichtungsring (S1) und der zweite Dichtungsring (S2) lippenförmige Dichtungsringe sind und die Lippenöffnungen jeweils auf den Außenteil der Elektrische-Maschine-Kammer gerichtet sind.

3. Radnabenantriebseinheit nach Anspruch 1, **dadurch gekennzeichnet, dass** von der ersten ringförmigen Vorsprungskante (231) und der zweiten ringförmigen Vorsprungskante mindestens eine ein Bestandteil des ersten Teils oder des zweiten Teils ist.

4. Radnabenantriebseinheit nach Anspruch 1, **dadurch gekennzeichnet, dass** der dritte Dichtungsring (S3) ein lippenförmiger Dichtungsring ist und eine auf den Innenteilder Untersetzungsgetriebekammer gerichtete Lippenöffnung aufweist.

5. Radnabenantriebseinheit nach Anspruch 4, **dadurch gekennzeichnet, dass** der dritte Dichtungsring (S3) außerdem eine auf den Außenteil der Untersetzungsgetriebekammer gerichtete Lippenöffnung aufweist.

6. Radnabenantriebseinheit nach Anspruch 1, **dadurch gekennzeichnet, dass** eine Flanschscheibe (112a) der Flanschwelle (112) der Radnaben-Montagefläche (111) zugewandt ist; die radiale Außenseite der Flanschscheibe (112) dem Gehäuse (500) in Radialrichtung oder in Axialrichtung gegenüber angeordnet ist und einen vierten Zwischenraum bildet; und in dem vierten Zwischenraum ein vierter Dichtungsring (S4) angeordnet ist.

7. Radnabenantriebseinheit nach Anspruch 6, **dadurch gekennzeichnet, dass** der vierte Dichtungsring (S4) ein lippenförmiger Dichtungsring ist und eine auf den Innenteil der Untersetzungsgetriebekammer gerichtete Lippenöffnung aufweist.

8. Radnabenantriebseinheit nach Anspruch 7, **dadurch gekennzeichnet, dass** der vierte Dichtungsring (S4) außerdem eine auf den Außenteil der Untersetzungsgetriebekammer gerichtete Lippenöffnung aufweist.

9. Radnabenantriebseinheit nach Anspruch 1, **dadurch gekennzeichnet, dass** das Untersetzungsgetriebe (400) ein Planetengetriebe ist, bei dem das Sonnenrad (410) als Eingangsende dient; und der erste Teil der Rotorhalterung (230) fest mit dem Sonnenrad (410) verbunden ist.

10. Radnabenantriebseinheit nach Anspruch 9, **dadurch gekennzeichnet, dass** der erste Teil der Rotorhatterung (230) in das Sonnenrad (410) eingesetzt und mit dem Sonnenrad (410) durch Presspassung verbunden ist.

11. Radnabenantriebseinheit nach Anspruch 1, **dadurch gekennzeichnet, dass** der zweite Teil der Rotorhalterung (230) und das Ausgangsende der Bremse (300) über ein erstes Verbindungsteil miteinander verbunden sind.

12. Radnabenantriebseinheit nach Anspruch 6, **dadurch gekennzeichnet, dass** das Ausgangsende des Untersetzungsgetriebes (400), die Flanschscheibe (112a) und die Radnaben-Montagefläche (111) über ein zweites Verbindungsteil miteinander verbunden sind.

## Claims

1. A wheel-hub drive unit comprising:
a wheel hub (110), having a wheel-hub mounting surface (111); a housing (500) arranged in the wheel hub (110) and a sealed electric machine chamber provided with an electric drive machine (200), a sealed reduction gear chamber provided with a reduction gear (400) and a brake chamber which is connected to the external surroundings and is provided with a brake (300);
wherein
the reduction gear chamber and the brake chamber are distributed in an axial direction away from the wheel-hub mounting surface (111);
the electric machine chamber comprises a base body (Q1) arranged close to the inner circumferential surface of the wheel hub (110) and a passage (Q2) which is connected to the base body (Q1) and extends in the direction of the central axis (C-C) of the wheel hub (110);
the output end of the electric drive machine (200) is guided through the passage (Q2), then protrudes out of the electric machine chamber and is connected simultaneously to the input end of the reduction gear (400) and the output end of the brake (300) and
the output end of the reduction gear (400) is connected to the wheel hub (110);
**characterised in that**
on the housing (500) at a position near the radially inner end of the passage (Q2) a sealing member is arranged which seals the electric machine chamber, wherein
the electric drive machine (200) comprises, in a coaxially mounted manner, an electric machine stator (210), an electric machine rotor (220) and a rotor holder (230) arranged fixedly on the electric machine rotor (220), wherein the rotor holder (230) is used as the output end of the electric drive machine (200) and the sealing member is arranged between the rotor holder (230) and the housing (500),
the rotor holder (230), extending in the axial direction on each of the two sides, has a first annular projection edge (231) and a second annular projection edge, wherein
the central axis (C-C) of the wheel hub in each case forms the centre of the first annular projection edge (231) and of the second annular projection edge;
the first annular projection edge (231) is arranged in the passage (Q2) or outside the electric machine chamber, a first clamping holding part (511) arranged opposite the first annular projection edge (231) in the radial direction is formed on the housing (500) and a first intermediate space is formed between the first clamping holding part (511) and the first annular projection edge (231);
the second annular protrusion edge is arranged in the passage (Q2) of the electric machine chamber or outside the electric machine chamber, a second clamping holding part arranged opposite the second annular protrusion edge in the radial direction or axial direction is formed on the housing (500) and a second intermediate space is formed between the second clamping holding part and the second annular projection edge;
the sealing member comprises a first sealing ring (S1) arranged in the first intermediate space and a second sealing ring (S2) arranged in the second intermediate space,
the passage (Q2) is arranged in the axial direction between the reduction gear chamber and the brake chamber,
the part of the rotor holder (230) projecting out of the passage (Q2) comprises a first part (230a) extending in the direction of the reduction gear (400) and a second part (230b) extending in the direction of the brake (300),
the first part (230a) is fixedly connected to the input end of the reduction gear (400),
and the second part (230b) is fixedly connected to the output end of the brake (300),
the wheel hub (110) comprises a flanged shaft (112) which is arranged on the central axis (C-C) of the wheel hub (110) and is fastened to the wheel-hub mounting surface (111), wherein the first part and the flange shaft (112) are arranged opposite one another in the radial direction and have a third intermediate space;
and a third sealing ring (S3) is arranged in the third intermediate space.

2. The wheel-hub drive unit according to claim 1, **characterised in that** the first sealing ring (S1) and the second sealing ring (S2) are lip-like sealing rings and the lip openings are each directed towards the outer part of the electric machine chamber.

3. The wheel-hub drive unit according to claim 1, **characterised in that** at least one of the first annular projection edge (231) and the second annular projection edge is a component of the first part or of the second part.

4. The wheel-hub drive unit according to claim 1, **characterised in that** the third sealing ring (S3) is a lip-like sealing ring and has a lip opening directed toward the inner part of the reduction gear chamber.

5. The wheel-hub drive unit according to claim 4, **characterised in that** the third sealing ring (S3) also has a lip opening directed toward the outer part of the reduction gear chamber.

6. The wheel-hub drive unit according to claim 1, **characterised in that** a flange disc (112a) of the flanged shaft (112) faces the wheel-hub mounting surface (111);
the radial outer side of the flange disc (112) is arranged opposite the housing (500) in the radial direction or in the axial direction and forms a fourth intermediate space;
and a fourth sealing ring (S4) is arranged in the fourth intermediate space.

7. The wheel-hub drive unit according to claim 6, **characterised in that** the fourth sealing ring (S4) is a lip-like sealing ring and has a lip opening directed towards the inner part of the reduction gear chamber.

8. The wheel-hub drive unit according to claim 7, **characterised in that** the fourth sealing ring (S4) further comprises a lip opening directed towards the outer part of the reduction gear chamber.

9. The wheel-hub drive unit according to claim 1, **characterised in that** the reduction gear (400) is a planetary gear in which the sun gear (410) is used as an input end;
and the first part of the rotor holder (230) is fixedly connected to the sun gear (410).

10. The wheel-hub drive unit according to claim 9, **characterised in that** the first part of the rotor holder (230) is inserted into the sun gear (410) and is connected by press fit to the sun gear (410).

11. The wheel-hub drive unit according to claim 1, **characterised in that** the second part of the rotor holder (230) and the output end of the brake (300) are interconnected via a first connecting part.

12. The wheel-hub drive unit according to claim 6, **characterised in that** the output end of the reduction gear (400), the flange disc (112a) and the wheel-hub mounting surface (111) are interconnected via a second connecting part.

## Revendications

1. Unité d'entraînement de moyeu de roue comprenant :
un moyeu de roue (110) qui présente une surface de montage de moyeu de roue (111) et un boitier (500) qui est disposé dans le moyeu de roue (110) et forme une chambre de moteur électrique rendue étanche pourvue d'un moteur électrique (200), une chambre d'engrenage réducteur rendue étanche pourvue d'un engrenage réducteur (400) ainsi qu'une chambre de frein pourvue d'un frein (300) et reliée à l'environnement extérieur ;
dans laquelle
la chambre d'engrenage réducteur et la chambre de frein sont réparties dans une direction axiale éloignée de la surface de montage du moyeu de roue (111) ;
la chambre de moteur électrique comprend un corps de base (Q1) disposé à proximité de la surface circonférentielle intérieure du moyeu de roue (110) et un passage (Q2) relié au corps de base (Q1) et s'étendant dans la direction de l'axe central (C-C) du moyeu de roue (110) ;
l'extrémité de sortie du moteur électrique (200) passe par le passage (Q2), puis s'étend hors de la chambre du moteur électrique et est connectée simultanément à l'extrémité d'entrée de l'engrenage réducteur (400) et à l'extrémité de sortie du frein (300) et
l'extrémité de sortie de l'engrenage réducteur (400) est reliée au moyeu de roue (110) ;
**caractérisée en ce que**
une partie d'étanchéité qui scelle la chambre du moteur électrique est disposée sur le boîtier (500) au niveau d'une position à proximité de l'extrémité radialement intérieure du passage (Q2), dans laquelle
le moteur électrique (200) disposé coaxialement comprend un stator (210) de moteur électrique, un rotor (220) de moteur électrique et un support de rotor (230) fixé à demeure au rotor (220) de moteur électrique, le support de rotor (230) servant d'extrémité de sortie du moteur électrique (200) et la partie d'étanchéité est disposée entre le support de rotor (230) et le boitier (500),
le support de rotor (230) présente un premier bord de projection annulaire (231) et un deuxième bord de projection annulaire s'étendant respectivement des deux côtés dans la direction axiale, dans laquelle
l'axe central (C-C) du moyeu de roue forme le centre du premier bord de projection annulaire (231) et du deuxième bord de projection annulaire, respectivement ;
le premier bord de projection annulaire (231) est disposé dans le passage (Q2) ou à l'extérieur de la chambre du moteur électrique, sur le boitier (500) est formée une première partie de dispositif de serrage (511) disposée dans la direction radiale ou la direction axiale en regard du premier bord de projection annulaire (231) et entre la première partie de dispositif de serrage (511) et le premier bord de projection annulaire (231) est formé un premier espace intermédiaire ;
le deuxième bord de projection annulaire est disposé dans le passage (Q2) de la chambre du moteur électrique ou à l'extérieur de la chambre du moteur électrique, sur le boîtier (500) est formée une deuxième partie de dispositif de serrage disposée dans la direction radiale ou la direction axiale en regard du deuxième bord de projection annulaire et entre la deuxième partie de dispositif de serrage et le deuxième bord de projection annulaire est formé un deuxième espace intermédiaire ;
la partie d'étanchéité comprend une première bague d'étanchéité (S1) agencée dans le premier espace intermédiaire et une deuxième bague d'étanchéité (S2) agencée dans le deuxième espace intermédiaire,
le passage (Q2) est disposé le long de la direction axiale entre la chambre d'engrenage réducteur et la chambre de frein,
la partie du support de rotor (230) faisant saillie hors du passage (Q2) comprend une première partie (230a) s'étendant dans la direction de l'engrenage réducteur (400) et une deuxième partie (230b) s'étendant dans la direction du frein (300),
la première partie (230a) est reliée de manière fixe à l'extrémité d'entrée de l'engrenage réducteur (400),
et la deuxième partie (230b) est reliée de manière fixe à l'extrémité de sortie du frein (300), le moyeu de roue (110) comprend un arbre à bride (112) disposé sur l'axe central (C-C) du moyeu de roue (110) et fixé à la surface de montage du moyeu de roue (111), dans laquelle la première partie et l'arbre à bride (112) sont disposés face à face dans la direction radiale et présentent un troisième espace intermédiaire ;
et dans le troisième espace, une troisième bague d'étanchéité (S3) est disposée.

2. Unité d'entraînement de moyeu de roue selon la revendication 1, **caractérisée en ce que** la première bague d'étanchéité (S1) et la deuxième bague d'étanchéité (S2) sont des bagues d'étanchéité en forme de lèvre et les ouvertures de lèvre sont dirigées respectivement vers la partie extérieure de la chambre du moteur électrique.

3. Unité d'entraînement de moyeu de roue selon la revendication 1, **caractérisée en ce que** l'un au moins du premier bord de projection annulaire (231) et du deuxième bord de projection annulaire est une composante de la première partie ou de la deuxième partie.

4. Unité d'entraînement de moyeu de roue selon la revendication 1, **caractérisée en ce que** la troisième bague d'étanchéité (S3) est une bague d'étanchéité en forme de lèvre et présente une ouverture de lèvre dirigée vers la partie intérieure de la chambre de l'engrenage réducteur.

5. Unité d'entraînement de moyeu de roue selon la revendication 4, **caractérisée en ce que** la troisième bague d'étanchéité (S3) comporte également une ouverture de lèvre dirigée vers la partie extérieure de la chambre de l'engrenage réducteur.

6. Unité d'entraînement de moyeu de roue selon la revendication 1, **caractérisée en ce qu'**un disque à bride (112a) fait face à l'arbre à bride (112) de la surface de montage du moyeu de roue (111) ;
le côté extérieur radial du disque à bride (112) est disposé en regard du boîtier (500) dans la direction radiale ou dans la direction axiale et forme un quatrième espace intermédiaire ;
et dans le quatrième espace intermédiaire, une quatrième bague d'étanchéité (S4) est disposée.

7. Unité d'entraînement de moyeu de roue selon la revendication 6, **caractérisée en ce que** la quatrième bague d'étanchéité (S4) est une bague d'étanchéité en forme de lèvre et présente une ouverture de lèvre dirigée vers la partie intérieure de la chambre de l'engrenage réducteur.

8. Unité d'entraînement de moyeu de roue selon la revendication 7, **caractérisée en ce que** la quatrième bague d'étanchéité (S4) comprend en outre une ouverture de lèvre dirigée vers la partie extérieure de la chambre de l'engrenage réducteur.

9. Unité d'entraînement de moyeu de roue selon la revendication 1, **caractérisée en ce que** l'engrenage réducteur (400) est un engrenage planétaire dans lequel la roue solaire (410) sert d'extrémité d'entrée ;
et la première partie du support de rotor (230) est reliée de manière fixe à la roue solaire (410).

10. Unité d'entraînement de moyeu de roue selon la revendication 9, **caractérisée en ce que** la première partie du support de rotor (230) est insérée dans la roue solaire (410) et est reliée par pression sur la roue solaire (410).

11. Unité d'entraînement de moyeu de roue selon la revendication 1, **caractérisée en ce que** la deuxième partie du support de rotor (230) et l'extrémité de sortie du frein (300) sont interconnectées par l'intermédiaire d'une première partie de liaison.

12. Unité d'entraînement de moyeu de roue selon la revendication 6, **caractérisée en ce que** l'extrémité de sortie de l'engrenage réducteur (400), le disque à bride (112a) et la surface de montage du moyeu de roue (111) sont reliés l'un à l'autre par une deuxième partie de liaison.
